# EUROPÄISCHE PATENTSCHRIFT

(11) **EP 3 963 318 B1**
(45) Veröffentlichungstag und Bekanntmachung des Hinweises auf die Patenterteilung: **22.03.2023**
(21) Anmeldenummer: 20718282.5
(22) Anmeldetag: 07.04.2020
(51) Int. Cl.: G01N 27/406, G01N 27/417

(54) **VERFAHREN ZUR BESTIMMUNG EINES INNENWIDERSTANDES EINER ELEKTROCHEMISCHEN ZELLE EINES KERAMISCHEN ABGASSENSORS**
METHOD OF DETERMINING THE INTERNAL RESISTANCE OF AN ELECTROCHEMICAL CELL IN A CERAMIC EXHAUST SENSOR
METHODE DE MESURE DE LA RÉSISTANCE INTERNE D'UNE CELLULE ELECTROCHIMIQUE DANS UN CAPTEUR CERAMIQUE DE GAZ D'ECHAPPEMENT

(30) Priorität: 03.05.2019 DE 102019206429
(43) Veröffentlichungstag der Anmeldung: 09.03.2022
(73) Patentinhaber: Robert Bosch GmbH, 70442 Stuttgart (DE)
(72) Erfinder: LEDERMANN, Bernhard, 71263 Weil Der Stadt (DE); BAUMANN, Fabian, 71563 Affalterbach (DE); DITTMER-GOBELJIC, Danka, 70191 Stuttgart (DE)
(86) Internationale Anmeldenummer: PCT/EP2020/059883
(87) Internationale Veröffentlichungsnummer: WO 2020/224902

(56) Entgegenhaltungen:
- DE-A1-102010 000 663
- US-A1- 2016 097 737

## Beschreibung

### Stand der Technik

Aus der DE 10 2010 000 663 A1 ist bereits eine Vorrichtung zum Betrieb einer Breitband-Lambdasonde im Abgaskanal einer Brennkraftmaschine und zur Erfassung von Informationen über den Betriebszustand der Breitband-Lambdasonde bekannt, wobei die Breitband-Lambdasonde einen Referenzelektrodenanschluss, einen inneren Pumpelektrodenanschluss, einen äußeren Pumpelektrodenanschluss und einen Messanschluss aufweist, wobei die Vorrichtung mit den Anschlüssen der Breitband-Lambdasonde sowie einem Erdungswiderstand und einem Kalibrierwiderstand verbunden ist, wobei die Vorrichtung eine erste Schaltmatrix zur gegenseitigen Verbindung einer Pumpstromquelle und einer Referenzstromquelle mit den Anschlüssen der Breitband-Lambdasonde, dem Erdungswiderstand, dem Kalibrierwiderstand und einer Referenzspannungsquelle aufweist, wobei die Vorrichtung eine zweite Schaltmatrix zur gegenseitigen Verbindung der Anschlüsse der Breitband-Lambdasonde, des Erdungswiderstands und des Kalibrierwiderstands sowie der Pumpstromquelle und der Referenzstromquelle mit einem digitalen Mess-System aufweist.

Zur Messung des Innenwiderstands einer elektrochemischen Zelle der Breitband-Lambdasonde sind insofern gemäß dem Stand der Technik Schaltzustände der Vorrichtung vorgesehen, in denen der Strom einer der Stromquellen vollumfänglich durch die betreffende elektrochemische Zelle fließt.

Die US 2016/097 377 A1 offenbart ein Verfahren mit einer Auswerte- und Steuereinheit.

### Vorteile der Erfindung

Die vorliegende Erfindung beruht hingegen auf der grundsätzlichen Erkenntnis der Erfinder, dass in der vorbekannten Vorgehensweise gerade bei relativ kalten elektrochemischen Zellen, also bei hohen Innenwiderständen der elektrochemischen Zellen, bei der Messung der Innenwiderstände der elektrochemischen Zellen gemäß dem ohmschen Gesetz Spannungen an den elektrochemischen Zellen abfallen können, die so hoch sind, dass nichtreversible Schädigungen des keramischen Festelektrolyts auftreten können und dass sich hierdurch die Lebensdauer der Lambdasonde verkürzt. Dabei haben sich sowohl hohe Spitzenwerte als auch hohe mittlere Werte der an den elektrochemischen Zellen anliegenden Spannungen als potenziell schädlich herausgestellt.

Durch die erfindungsgemäße Maßnahme, dass die Bestimmung des Innenwiderstandes der elektrochemischen Zelle in einem ersten Betriebsmodus bei geschlossenem ersten Schalter und bei geschlossenem zweiten Schalter erfolgt, also indem der elektrochemischen Zelle während der Messung ein erster Widerstand parallelgeschaltet wird, wird erreicht, dass an der elektrochemischen Zelle auch bei relativ geringer Temperatur, also bei hohen Innenwiderständen der elektrochemischen Zelle, im Mittel und in der Spitze nur solche Spannungen abfallen, die den Festelektrolyt nicht nichtreversibel schädigen. Die Lebensdauer der Lambdasonde ist durch das erfindungsgemäße Verfahren also verlängert.

Zweckmäßigerweise kann vorgesehen sein, dass zumindest immer dann gemäß diesem ersten Betriebsmodus die Bestimmung des Innenwiderstandes der elektrochemischen Zelle erfolgt, wenn der Innenwiderstand der elektrochemischen Zelle einen Wert beträgt, der oberhalb eines Schwellwerts liegt. Es kann auch dann gemäß dem ersten Betriebsmodus die Bestimmung des Innenwiderstandes der elektrochemischen Zelle erfolgen, wenn der Innenwiderstand der elektrochemischen Zelle noch nicht bekannt ist.

Anderseits kann in einer Weiterbildung vorgesehen sein, dass die Bestimmung des Innenwiderstandes der elektrochemischen Zelle gemäß einem zweiten Betriebsmodus erfolgt, in dem der zweite Schalter offen ist, in dem also insbesondere die Stromquelle lediglich über die elektrochemische Zelle mit der Signalauswerteeinheit verbunden ist, wenn die Voraussetzung erfüllt ist, dass der Innenwiderstand der elektrochemischen Zelle einen Wert beträgt, der nicht oberhalb eines Schwellwerts liegt. Beispielsweise kann zur Bewertung, ob die Voraussetzung erfüllt ist, auf das Ergebnis einer vorangegangenen Innenwiderstandsmessung zurückgegriffen werden, falls ein solches vorhanden ist.

Der angesprochene Schwellwert kann beispielsweise 4 kOhm betragen und/oder beispielsweise in einem Bereich von 1 kOhm bis 8 kOhm liegen. Auch der erste Widerstand kann einen Widerstandswert von 4kOhm aufweisen oder einen Widerstandswert zwischen 1 kOhm und 8 kOhm aufweisen. Der Schwellwert kann insbesondere exakt oder in etwa (z.B. +/- 30%) gleich dem Widerstandswert des ersten Widerstands sein.

Es kann zusätzlich oder alternativ auch vorgesehen sein, dass unterhalb einer bestimmten Temperatur der elektrochemischen Zelle gemäß dem ersten Betriebsmodus und oberhalb einer bestimmten Temperatur der elektrochemischen Zelle gemäß dem zweiten Betriebsmodus vorgegangen wird. Die bestimmte Temperatur kann beispielsweise 500°C betragen oder in einem Bereich zwischen 400°C und 600°C liegen.

Es kann alternativ allerdings auch stets gemäß dem ersten Betriebsmodus vorgegangen werden.

Es ist insbesondere vorgesehen, dass der erste Schalter geöffnet ist, wenn der Innenwiderstand der ersten elektrochemischen Zelle nicht bestimmt wird. Die elektrochemische Zelle ist in diesem Fall elektrisch nicht mit der Stromquelle verbunden.

Es kann andererseits vorgesehen sein, dass der zweite Schalter stets oder zumindest zeitweise gemäß dem ersten Betriebsmodus auch dann geschlossen ist, wenn der Innenwiderstand der ersten elektrochemischen Zelle nicht bestimmt wird. Die Elektroden der elektrochemischen Zelle sind dann über den ersten Widerstand miteinander verbunden, woraus ein Schutz vor schädlichen, an der elektrochemischen Zelle anliegenden Spannungen auch in diesen Phasen resultiert und die im Mittel an der elektrochemischen Zelle anliegende Spannung weiter reduziert wird.

Es ist vorgesehen, dass die Signalauswerteeinheit den Innenwiderstand der elektrochemischen Zelle auf Basis der ihr zugeführten elektrischen Signale bestimmt.

Beispielsweise kann die an der elektrochemischen Zelle, bzw. die an der Parallelschaltung aus elektrochemischer Zelle und erstem Widerstand, abfallende Spannung ausgewertet werden, beispielsweise relativ durch Vergleich eines Zustands, in dem die elektrochemische Zelle bestromt ist mit einem Zustand, in dem die elektrochemische Zelle nicht bestromt ist.

Ferner können Einschwingvorgänge, die nach dem Schließen des ersten Schalters erfolgen, geschickt berücksichtigt werden, beispielsweise so, wie es in der WO18206191 A1 beschrieben ist.

Die Erfindung wurde vorangehend mit Bezug auf eine elektrochemische Zelle erläutert. Bei Lambdasonden bzw. anderen Abgassensoren mit zwei oder mehr elektrochemischen Zellen können auch die Innenwiderstände beider bzw. aller elektrochemischen Zellen jeweils auf die erfindungsgemäße Art und Weise bestimmt werden.

Eine Weiterbildung der Erfindung, die Lambdasonden mit zwei elektrochemischen Zellen betrifft, sieht insofern vor, dass die Auswerte- und Steuereinheit einen dritten elektrischen Anschluss aufweist, zur Verbindung mit einer ersten Elektrode einer zweiten elektrochemischen Zelle des keramischen Abgassensors, wobei der zweite elektrische Anschluss der Auswerte- und Steuereinheit zur Verbindung mit der zweiten Elektrode der zweiten elektrochemischen Zelle des keramischen Abgassensors vorgesehen ist, und dass die Bestimmung des Innenwiderstands der zweiten elektrochemischen Zelle erfolgt, indem die Stromquelle der Auswerte- und Steuereinheit über den ersten Schalter der Auswerte- und Steuereinheit oder über einen anderen ersten Schalter der Auswerte- und Steuereinheit mit dem dritten Anschluss verbindbar ist, wobei die Signalauswerteeinheit der Auswerte- und Steuereinheit mit dem zweiten elektrischen Anschluss verbunden ist, sodass die Stromquelle über die zweite elektrochemische Zelle mit der Signalauswerteeinheit der Auswerte- und Steuereinheit verbunden ist, wobei die Stromquelle, wenn sie mit dem dritten Anschluss verbunden ist, auch über einen anderen zweiten Schalter der Auswerte- und Steuereinheit und über den zu dem anderen zweiten Schalter in Reihe geschalteten ersten Widerstand der Auswerte- und Steuereinheit oder über einen anderen ersten Widerstand der Auswerte- und Steuereinheit mit der Signalauswerteeinheit der Auswerte- und Steuereinheit verbindbar ist, sodass der Pfad, in dem der andere zweite Schalter der Auswerte- und Steuereinheit und der erste Widerstand der Auswerte- und Steuereinheit oder der andere erste Widerstand der Auswerte- und Steuereinheit in Reihe geschaltet sind, mit dem Pfad, in dem die zweite elektrochemische Zelle geschaltet ist, parallel geschaltet ist, und wobei die Signalauswerteeinheit auf Basis der ihr zugeführten elektrischen Signale den Innenwiderstand der zweiten elektrochemischen Zelle ermittelt.

Es kann vorgesehen sein, dass die Bestimmung des Innenwiderstands der elektrochemischen Zelle und die Bestimmung des Innenwiderstands der zweiten elektrochemischen Zelle nicht gleichzeitig, sondern periodisch abwechselnd erfolgt.

Zeichnung
- Figur 1: zeigt schematisch eine Auswerte- und Steuereinheit und anhand der Teilfiguren a, b, c, d und e die Durchführung des erfindungsgemäßen Verfahrens gemäß einem Beispiel,
- Figur 2: zeigt eine alternative Auswerte- und Steuereinheit,
- Figur 3: zeigt beispielhaft die von der Stromquelle erzeugen Ströme und die an der Nernstzelle anliegenden Spannungen während des erfindungsgemäßen Verfahrens und während einer Vergleichsmessung.

### Beschreibung der Ausführungsbeispiele

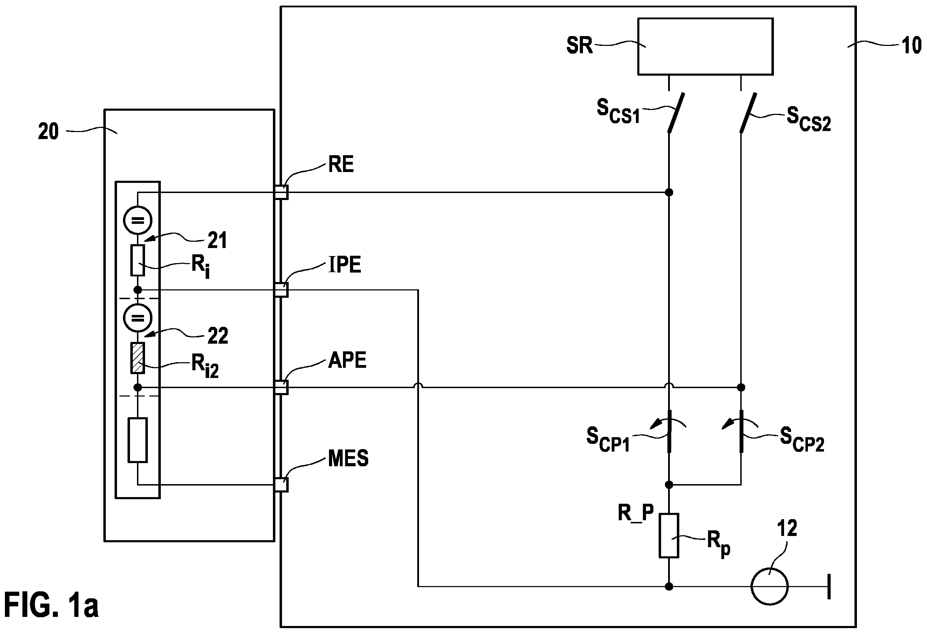

Die Figur 1a zeigt schematisch eine Auswerte- und Steuereinheit 10 zur Durchführung des erfindungsgemäßen Verfahrens. Die Auswerte- und Steuereinheit 10 weist vier Ausgänge RE, IPE, APE und MES auf, über die sie mit einer Breitband-Lambdasonde 20 verbunden ist. Im Beispiel sind die Anschlüsse RE und IPE mit einer ersten elektrochemischen Zelle 21 der Breitband-Lambdasonde 20 verbunden, beispielsweise einer Nernstzelle der Breitband-Lambdasonde 20, und die Anschlüsse IPE und APE sind mit einer zweiten elektrochemischen Zelle 22 der Breitband-Lambdasonde 20 verbunden, beispielsweise einer Pumpzelle der Breitband-Lambdasonde 20. Die Ausgänge APE und MES können beispielsweise mit einem Abgleichwiderstand der Breitband-Lambdasonde 20 verbunden sein.

Die Auswerte- und Steuereinheit 10 weist ferner eine Stromquelle SR auf, die innerhalb gewisser Grenzen einen vorgegebenen Strom unabhängig von der an sie angeschlossenen Last erzeugt, beispielsweise einen Strom im Bereich von 0,25 mA. Die Auswerte- und Steuereinheit 10 weist ferner eine Signalauswerteeinheit 12 auf, die beispielsweise ein an ihr angeschlossenes elektrisches Potenzial relativ zu einem Massepotenzial und/oder relativ zu einem zuvor oder nachfolgend erfasstem Potenzial auszuwerten vermag.

Um den Innenwiderstand Rᵢ der Nernstzelle 21 der Breitband-Lambdasonde messen zu können, ist die Stromquelle SR über einen ersten Schalter S_{CS1} mit dem Anschluss RE verbindbar und ist die Signalauswerteeinheit 12 mit dem Anschluss IPE verbunden. Um ferner den Innenwiderstand Rᵢ₂ der Pumpzelle 22 der Breitband-Lambdasonde messen zu können, ist die Stromquelle SR zusätzlich über einen anderen ersten Schalter S_{CS2} auch mit dem Anschluss APE verbindbar. Parallel zu der Nernstzelle 21 sind in der Auswerte- und Steuereinheit 10 ein zweiter Schalter S_{CP1} und ein erster Widerstand R_P, dessen Widerstandswert R_{P} im Beispiel 4 kOhm beträgt, zueinander in Reihe geschaltet.

Ferner sind parallel zu der Pumpzelle 22 in der Auswerte- und Steuereinheit 10 ein anderer zweiter Schalter S_{CP2} und der erste Widerstand R_P, zueinander in Reihe geschaltet. Der erste Widerstand R_P ist insofern sowohl in dem zu der Nernstzelle 21 parallelen Zweig, als auch in dem zu der Pumpzelle 22 parallelen Zweig angeordnet. Alternativ wäre es auch möglich, zwei verschiedene erste Widerstände R_P zu verwenden.

In der Figur 1a sind die beiden ersten Schalter S_{CS1}, S_{CS2} geöffnet und die beiden zweiten Schalter S_{CP1}, S_{CP1} sind geschlossen. Es findet hier also gerade keine Innenwiderstandsmessung statt. Die Nernstzelle 21 und die Pumpzelle 22 sind hier beispielhaft jeweils über den ersten Widerstand R_P kurzgeschlossen, sodass ein Schutz der beiden elektrochemischen Zellen 21, 22 vor schädlichen an ihnen anliegenden Spannungen resultiert.

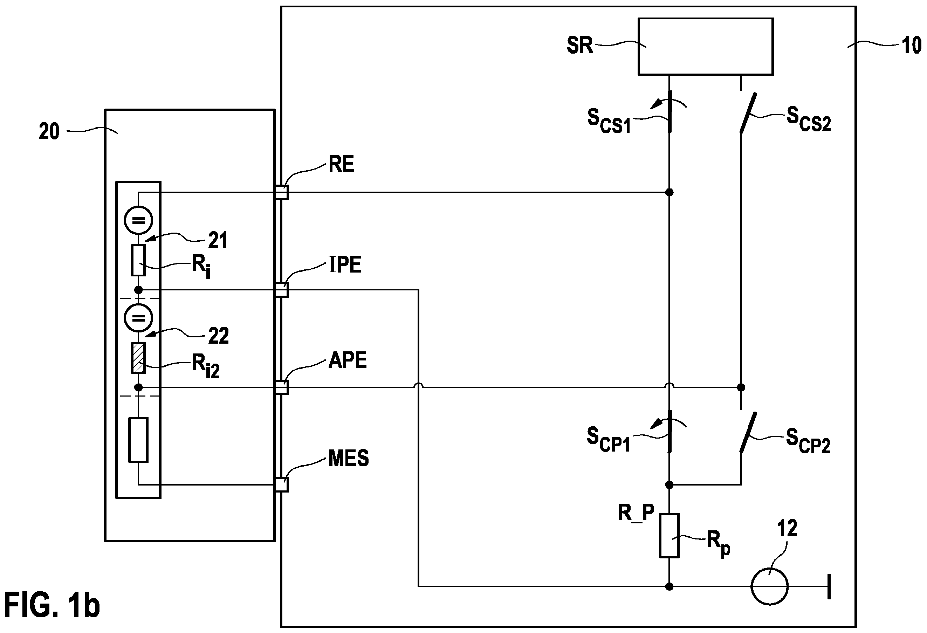

Figur 1b zeigt die Messung des Innenwiderstands Rᵢ der Nernstzelle 21 gemäß dem ersten Betriebsmodus, also bei hochohmiger, kalter Nernstzelle 21. Dabei sind der erste Schalter Scsi und der zweite Schalter S_{CP1} geschlossen, sodass der von der Stromquelle SR erzeugte Strom von beispielsweise I_{SR} = 0,25 mA zu der Signalauswerteeinheit 12 fließt und sich dabei gemäß den kirchhhoffschen Gesetzen in den durch die Nernstzelle 21 führenden Zweig und den durch den ersten Widerstand R_P führenden Zweig derart aufteilt, dass das Produkt aus elektrischem Widerstand und fließendem Strom in den beiden Zweigen gleich ist. Die an der Nernstzelle 21 von außen anliegende Spannung kann also selbst bei hochohmiger (kalter) Nernstzelle 21 nicht größer werden als das Produkt aus dem Widerstandswert R_{P} des ersten Widerstands und dem von der Stromquelle erzeugten Strom I_{SR}, im Beispiel 1 Volt. Das ist ein für die Keramik und den Festelektrolyten der Nernstzelle 21 unkritischer Wert. Durch Erfassung des entsprechenden Potenzials kann in der Signalauswerteeinheit 12 auf den hohen Innenwiderstand und die geringe Temperatur der Nernstzelle 21 geschlossen werden. Mehr im Detail können Einschwingvorgänge, die nach dem Schließen des ersten Schalters S_{CS1} erfolgen, geschickt berücksichtigt werden, beispielsweise so, wie es in der WO18206191 A1 beschrieben ist.

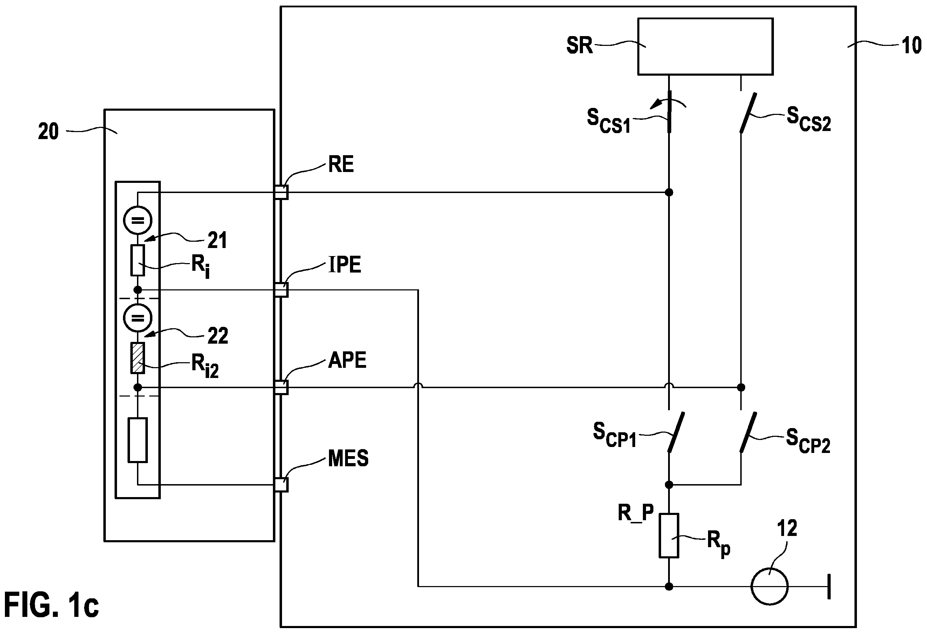

Figur 1c zeigt die Messung des Innenwiderstands Rᵢ der Nernstzelle 21 gemäß dem zweiten Betriebsmodus, also bei niederohmiger, heißer Nernstzelle 21. Dabei ist der erste Schalter Scsi weiterhin geschlossen, der zweite Schalter S_{CP1} ist jedoch geöffnet, sodass der von der Stromquelle SR erzeugte Strom von beispielsweise I_{SR} = 0,25 mA durch die Nernstzelle 21 und weiter zu der Signalauswerteeinheit 12 fließt. Im Beispiel wird in der Signalauswerteeinheit ein Potenzial gemessen, das einem Spannungsabfall von 50mV an der Nernstzelle entspricht. Hieraus wird geschlossen, dass der Innenwiderstand Rᵢ der Nernstzelle 200 Ohm beträgt, was zum Beispiel einer Temperatur der Nernstzelle 21 von 780°C entspricht.

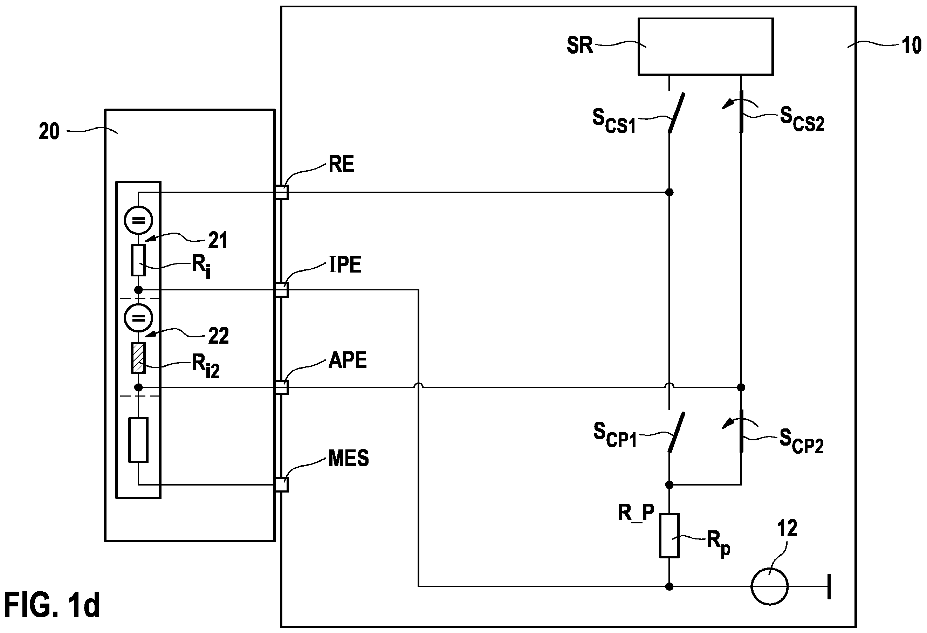

Figur 1d zeigt die Messung des Innenwiderstands Rᵢ₂ der Pumpzelle 22 gemäß dem ersten Betriebsmodus, also bei hochohmiger, kalter Pumpzelle 22. Dabei sind der weitere erste Schalter S_{CS2} und der weitere zweite Schalter S_{CP2} geschlossen, sodass der von der Stromquelle SR erzeugte Strom von beispielsweise I_{SR} = 0,25 mA zu der Signalauswerteeinheit 12 fließt und sich dabei gemäß den kirchhhoffschen Gesetzen in den durch die Pumpzelle 22 führenden Zweig und den durch den ersten Widerstand R_P führenden Zweig derart aufteilt, dass das Produkt aus elektrischem Widerstand und fließendem Strom in den beiden Zweigen gleich ist. Die an der Pumpzelle 22 von außen anliegende Spannung kann also selbst bei hochohmiger (kalter) Pumpzelle 22 nicht größer werden als das Produkt aus dem Widerstandswert R_{P} des ersten Widerstands und dem von der Stromquelle erzeugte Strom I_{SR}, im Beispiel 1 Volt. Das ist ein auch für die Keramik und den Festelektrolyten der Pumpzelle 22 unkritischer Wert. Durch Erfassung des entsprechenden Potenzials kann in der Signalauswerteeinheit 12 auf den hohen Innenwiderstand und die geringe Temperatur der Pumpzelle geschlossen werden.

Mehr im Detail können Einschwingvorgänge, die nach dem Schließen des weiteren ersten Schalters S_{CS2} erfolgen, geschickt berücksichtigt werden, beispielsweise so, wie es in der WO18206191 A1 beschrieben ist.

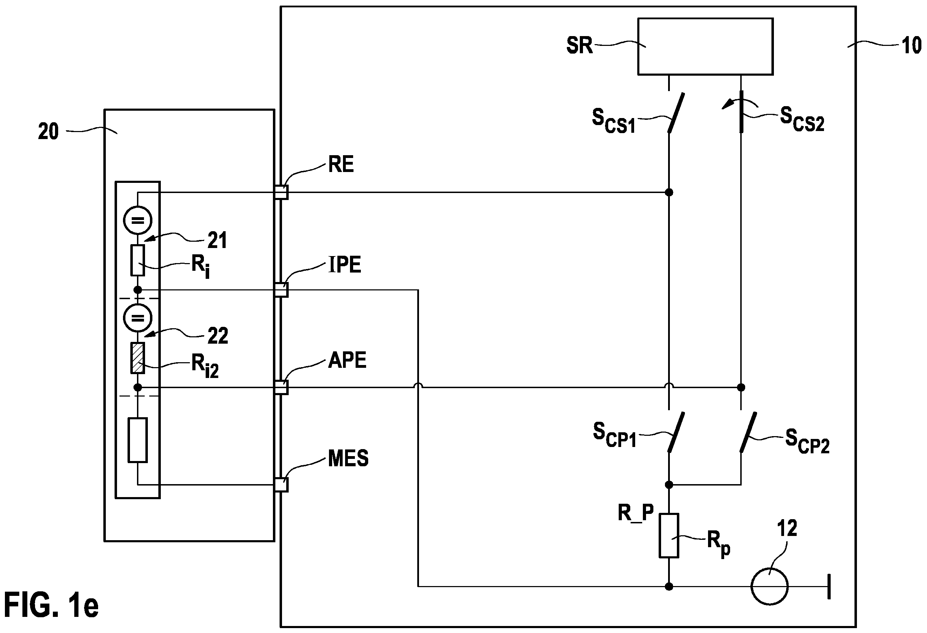

Figur 1e zeigt die Messung des Innenwiderstands Rᵢ₂ der Pumpzelle 22 gemäß dem zweiten Betriebsmodus, also bei niederohmiger, heißer Pumpzelle 22. Dabei ist der weitere erste Schalter S_{CS2} weiterhin geschlossen, der weitere zweite Schalter S_{CP2} ist jedoch geöffnet, sodass der von der Stromquelle SR erzeugte Strom von beispielsweise I_{SR} = 0,25 mA durch die Pumpzelle 22 und weiter zu der Signalauswerteeinheit 12 fließt. Im Beispiel wird in der Signalauswerteeinheit 12 ein Potenzial gemessen, das einem Spannungsabfall von 50mV an der Pumpzelle entspricht. Hieraus wird geschlossen, dass der Innenwiderstand der Pumpzelle 200 Ohm beträgt, was zum Beispiel einer Temperatur der Pumpzelle von 780°C entspricht.

Im Beispiel ist vorgesehen, dass die Messung der Innenwiderstände Rᵢ, Rᵢ₂ der Nernstzelle 21 und der Pumpzelle 22 periodisch und im Wechsel erfolgt, und zwar gemäß zweitem Betriebsmodus, wenn bekannt ist, dass diese Innenwiderstände Rᵢ, Rᵢ₂ kleiner als 4 kOhm sind, und sonst gemäß dem ersten Betriebsmodus, also dann, wenn die Innenwiderstände Rᵢ, Rᵢ₂ der Nernstzelle 21 und der Pumpzelle 22 nicht aus einer vorangegangenen Messung bekannt sind oder wenn bekannt ist, dass diese Innenwiderstände Rᵢ, Rᵢ₂ größer als 4 kOhm sind.

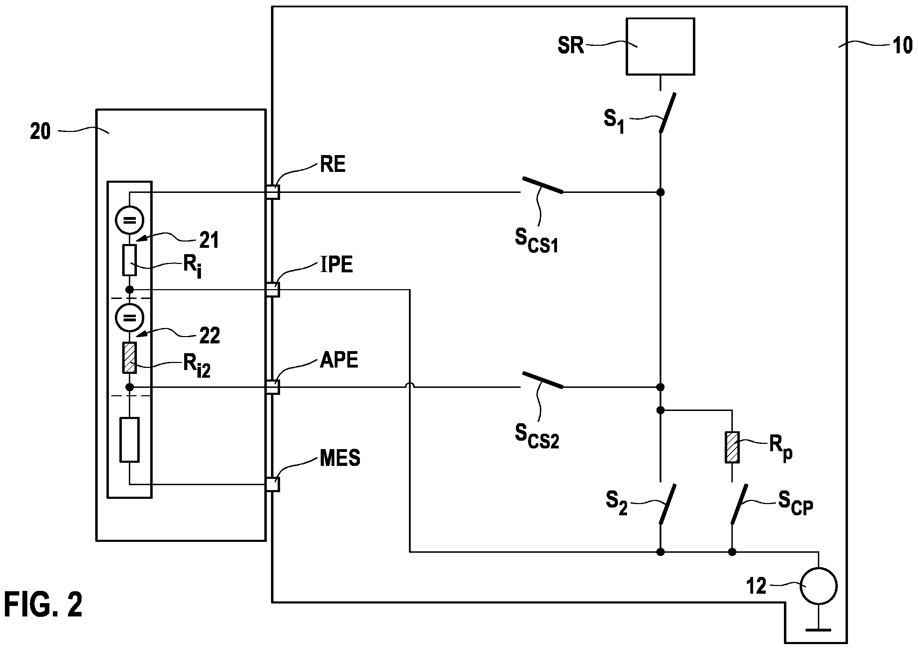

Figur 2 zeigt eine alternative Auswerte und Steuereinheit 10, bei der die die beiden ersten Schalter S_{CS1}, S_{CS2} direkt vor den Anschlüssen RE und APE angeordnet sind und bei der nur ein einziger zweiter Schalter S_{CP} vorgesehen ist. Es sind in diesem Beispiel außerdem zwei weitere Schalter S₁ und S₂ vorgesehen, über die die Stromquelle SR mit der Signalauswerteeinheit 12 verbindbar ist.

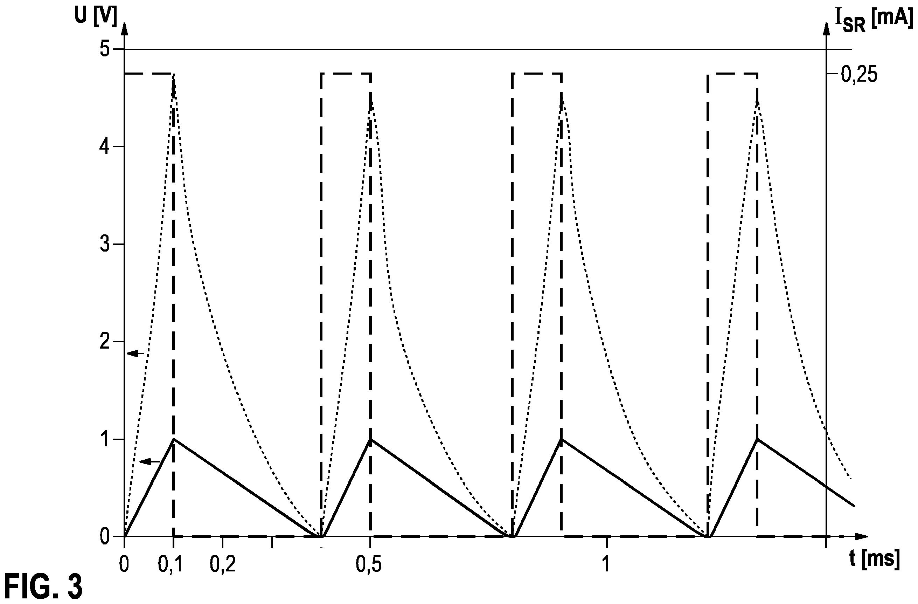

Zur weiteren Erläuterung des Verfahrens ist in der Figur 3 der von der Stromquelle SR erzeugte Pumpstrom I_{SR} und die an der Nernstzelle 21 einer kalten Lambdasonde 20 abfallende Spannung U im zeitlichen Verlauf dargestellt.

Dabei springt der Pumpstrom I_{SR} zwischen den Werten 0 mA und 0,25 mA hin und her, siehe gestrichelte Linie. Der zweite Schalter S_{CP1} ist gemäß dem für eine kalte Sonde 20 vorgesehenen ersten Betriebsmodus geschlossen, sodass die an der Nernstzelle 21 abfallende Spannung den Wert von 1 Volt nicht überschreitet, siehe durchgezogene Linie.

Lediglich zum Zweck des Vergleichs wurde der Innenwiderstand Rᵢ der Nernstzelle 21 bei einer kalten Sonde 20 gemäß zweitem Betriebsmodus (also bei geöffnetem zweiten Schalter S_{CP1}) gemessen, was nicht dem erfindungsgemäßem Vorgehen entspricht, sondern dem Vorgehen gemäß dem eingangs genannten Stand der Technik. An der Nernstzelle 21 fallen dabei hohe Spannungen U von im Beispiel bis zu 4,5 V ab, siehe gepunktete Linie. Obwohl derartige Spannungen an der Nernstzelle 21 letztere nicht unmittelbar zerstören, führen sie gemäß neueren Erkenntnissen der Anmelderin bei periodischem Anliegen doch zu einer Verkürzung der Lebensdauer der Lambdasonde 20 und werden daher vorzugsweise vermieden.

Die beschriebene Auswerte- und Steuereinheit kann beispielsweise auf einem ASIC integriert sein.

## Patentansprüche

1. Verfahren zur Bestimmung eines Innenwiderstandes (Rᵢ) einer elektrochemischen Zelle (21, 22) eines keramischen Abgassensors (20), insbesondere einer Lambdasonde, wobei die elektrochemische Zelle (21, 22) eine erste Elektrode und eine zweite Elektrode und einen zwischen der ersten Elektrode und der zweiten Elektrode angeordneten Festelektrolyten aufweist, wobei die Bestimmung des Innenwiderstandes (Rᵢ) der elektrochemischen Zelle (21, 22) mittels einer Auswerte- und Steuereinheit (10) erfolgt, wobei die Auswerte- und Steuereinheit (10) einen ersten elektrischen Anschluss (RE) zur Verbindung mit einer ersten Elektrode der elektrochemischen Zelle (21, 22) des keramischen Abgassensors (20) aufweist, wobei die Auswerte- und Steuereinheit (10) einen zweiten elektrischen Anschluss (IPE) zur Verbindung mit einer zweiten Elektrode der elektrochemischen Zelle (21, 22) des keramischen Abgassensors aufweist, wobei die Auswerte- und Steuereinheit (10) eine Stromquelle (SR) aufweist, die über einen ersten Schalter (S_{CS1}) der Auswerte- und Steuereinheit (10) mit dem ersten elektrischen Anschluss (RE) verbindbar ist, wobei eine Signalauswerteeinheit (12) der Auswerte- und Steuereinheit (10) mit dem zweiten elektrischen Anschluss (IPE) verbunden ist, sodass die Stromquelle (SR) über die elektrochemische Zelle (21, 22) mit der Signalauswerteeinheit (12) der Auswerte- und Steuereinheit (10) verbunden ist, wobei die Stromquelle (SR), wenn sie mit dem ersten Anschluss (RE) verbunden ist, auch über einen zweiten Schalter (S_{CP1}) der Auswerte- und Steuereinheit (10) und über einen zu dem zweiten Schalter (S_{CP1}) in Reihe geschalteten ersten Widerstand (R_P) der Auswerte- und Steuereinheit (10) mit der Signalauswerteeinheit (12) der Auswerte- und Steuereinheit (10) verbindbar ist, sodass der Pfad, in dem der zweite Schalter (S_{CP1}) der Auswerte- und Steuereinheit (10) und der erste Widerstand (R_P) der Auswerte- und Steuereinheit (10) in Reihe geschaltet sind, mit dem Pfad, in dem die elektrochemische Zelle (21, 22) geschaltet ist, parallel geschaltet ist und wobei die Signalauswerteeinheit (12) auf Basis der ihr so zugeführten elektrischen Signale den Innenwiderstand (Rᵢ) der elektrochemischen Zelle (21, 22) bestimmt, **dadurch gekennzeichnet, dass** die Bestimmung des Innenwiderstandes (Rᵢ) der elektrochemischen Zelle (21, 22) in einem ersten Betriebsmodus bei geschlossenem ersten Schalter (Scsi) und bei geschlossenem zweiten Schalter (S_{CP1}) erfolgt.

2. Verfahren nach Anspruch 1, **dadurch gekennzeichnet, dass** die Bestimmung des Innenwiderstandes (Rᵢ) der elektrochemischen Zelle (21, 22) in einem zweiten Betriebsmodus bei geschlossenem ersten Schalter (Scsi) und bei offenem zweiten Schalter (S_{CP1}) erfolgt.

3. Verfahren nach Anspruch 2, **dadurch gekennzeichnet, dass** die Bestimmung des Innenwiderstandes (Rᵢ) der elektrochemischen Zelle (21, 22) gemäß dem ersten Betriebsmodus erfolgt, wenn der Innenwiderstand (Rᵢ) der elektrochemischen Zelle (21, 22) einen vorgegebenen Schwellwert übersteigt und die Bestimmung des Innenwiderstandes (Rᵢ) der elektrochemischen Zelle (21, 22) gemäß dem zweiten Betriebsmodus erfolgt, wenn der Innenwiderstand (Rᵢ) der elektrochemischen Zelle (21, 22) einen vorgegebenen Schwellwert unterschreitet.

4. Verfahren nach Anspruch 3, **dadurch gekennzeichnet, dass** der vorgegebene Schwellwert mit dem Widerstandswert des ersten Widerstands (R_P) der Auswerte- und Steuereinheit (10) exakt oder in etwa übereinstimmt, beispielsweise 4 kOhm beträgt oder beispielsweise 1 kOhm bis 8 kOhm beträgt.

5. Verfahren nach einem der vorangehenden Ansprüche, **dadurch gekennzeichnet, dass** der erste Schalter (Scsi) geöffnet ist, wenn der Innenwiderstand (Rᵢ) der ersten elektrochemischen Zelle (21, 22) nicht bestimmt wird.

6. Verfahren nach einem der vorangehenden Ansprüche, **dadurch gekennzeichnet, dass** der zweite Schalter (S_{CP1}) stets oder zumindest zeitweise geschlossen ist, wenn der Innenwiderstand (Rᵢ) der ersten elektrochemischen Zelle (21, 22) nicht bestimmt wird.

7. Verfahren nach einem der vorangehenden Ansprüche, **dadurch gekennzeichnet, dass** die Signalauswerteeinheit (12) den Innenwiderstand (Rᵢ) der elektrochemischen Zelle (21, 22) auf Basis der ihr zugeführten elektrischen Signale und unter Berücksichtigung der diese Signale betreffenden Einschwingvorgänge, die nach dem Schließen des ersten Schalters (S_{CS1}) erfolgen, bestimmt.

8. Verfahren nach einem der vorangehenden Ansprüche, **dadurch gekennzeichnet, dass** die Auswerte- und Steuereinheit (10) einen dritten elektrischen Anschluss (APE) aufweist, zur Verbindung mit einer ersten Elektrode einer zweiten elektrochemischen Zelle (21, 22) des keramischen Abgassensors (20), wobei der zweite elektrische Anschluss (IPE) der Auswerte- und Steuereinheit (10) zur Verbindung mit der zweiten Elektrode der zweiten elektrochemischen Zelle (21, 22) des keramischen Abgassensors (20) vorgesehen ist, und dass die Bestimmung des Innenwiderstands (Rᵢ₂) der zweiten elektrochemischen Zelle (21, 22) sinngemäß so erfolgt, wie es in dem einen der vorangehenden Ansprüche für die erste elektrochemische Zelle (21, 22) beschrieben ist.

9. Verfahren nach dem vorangehenden Anspruch, **dadurch gekennzeichnet, dass** die Bestimmung des Innenwiderstands (Rᵢ) der elektrochemischen Zelle (21, 22) und die Bestimmung des Innenwiderstands (Rᵢ₂) der zweiten elektrochemischen Zelle (21, 22) periodisch abwechselnd erfolgt.

10. Auswerte- und Steuereinheit (10) zur Bestimmung eines Innenwiderstandes (Rᵢ) einer elektrochemischen Zelle (21, 22) eines keramischen Abgassensors (20), insbesondere einer Lambdasonde, wobei die elektrochemische Zelle (21, 22) eine erste Elektrode und eine zweite Elektrode und einen zwischen der ersten Elektrode und der zweiten Elektrode angeordneten Festelektrolyten aufweist, wobei die Auswerte- und Steuereinheit (10) einen ersten elektrischen Anschluss (RE) zur Verbindung mit einer ersten Elektrode der elektrochemischen Zelle (21, 22) des keramischen Abgassensors (20) aufweist, wobei die Auswerte- und Steuereinheit (10) einen zweiten elektrischen Anschluss (IPE) zur Verbindung mit einer zweiten Elektrode der elektrochemischen Zelle (21, 22) des keramischen Abgassensors (20) aufweist, wobei die Auswerte- und Steuereinheit (10) eine Stromquelle (SR) aufweist, die über einen ersten Schalter (S_{CS1}) der Auswerte- und Steuereinheit (10) mit dem ersten Anschluss (RE) verbindbar ist, wobei eine Signalauswerteeinheit (12) der Auswerte- und Steuereinheit (10) mit dem zweiten elektrischen Anschluss (IPE) verbunden ist, sodass die Stromquelle (SR) über die elektrochemische Zelle (21, 22) mit der Signalauswerteeinheit (12) der Auswerte- und Steuereinheit (10) verbunden ist, wobei die Stromquelle (SR), wenn sie mit dem ersten elektrischen Anschluss (RE) verbunden ist, auch über einen zweiten Schalter (S_{CP1}) der Auswerte- und Steuereinheit (10) und über einen zu dem zweiten Schalter (S_{CP1}) in Reihe geschalteten ersten Widerstand (R_P) der Auswerte- und Steuereinheit (10) mit der Signalauswerteeinheit (12) der Auswerte- und Steuereinheit (10) verbindbar ist, sodass der Pfad, in dem der zweite Schalter (S_{CP1}) der Auswerte- und Steuereinheit (10) und der erste Widerstand (R_P) der Auswerte- und Steuereinheit (10) in Reihe geschaltet sind, mit dem Pfad, in dem die elektrochemische Zelle (21, 22) geschaltet ist, parallel geschaltet ist, wobei die Auswerte- und Steuereinheit (10) dazu eingerichtet ist, dass die Signalauswerteeinheit (10) auf Basis der ihr so zugeführten elektrischen Signale den Innenwiderstand (Rᵢ) der elektrochemischen Zelle (21, 22) gemäß einem der vorangehenden Ansprüche zu bestimmen.

11. Auswerte- und Steuereinheit nach dem vorangehenden Anspruch, **dadurch gekennzeichnet, dass** sie auf einem ASIC integriert ist.

## Claims

1. Method for determining an internal resistance (Rᵢ) of an electrochemical cell (21, 22) of a ceramic exhaust gas sensor (20), in particular of a lambda probe, the electrochemical cell (21, 22) having a first electrode and a second electrode and a solid electrolyte arranged between the first electrode and the second electrode, the internal resistance (Rᵢ) of the electrochemical cell (21, 22) being determined by means of an evaluation and control unit (10), the evaluation and control unit (10) having a first electrical terminal (RE) for connection to a first electrode of the electrochemical cell (21, 22) of the ceramic exhaust gas sensor (20), the evaluation and control unit (10) having a second electrical terminal (IPE) for connection to a second electrode of the electrochemical cell (21, 22) of the ceramic exhaust gas sensor, the evaluation and control unit (10) having a current source (SR), which is connectable to the first electrical terminal (RE) via a first switch (Scsi) of the evaluation and control unit (10), a signal evaluation unit (12) of the evaluation and control unit (10) being connected to the second electrical terminal (IPE), such that the current source (SR) is connected to the signal evaluation unit (12) of the evaluation and control unit (10) via the electrochemical cell (21, 22), the current source (SR), if connected to the first terminal (RE), also being connectable to the signal evaluation unit (12) of the evaluation and control unit (10) via a second switch (S_{CP1}) of the evaluation and control unit (10) and via a first resistor (R_P) of the evaluation and control unit (10), said first resistor being connected in series with the second switch (S_{CP1}), such that the path in which the second switch (S_{CP1}) of the evaluation and control unit (10) and the first resistor (R_P) of the evaluation and control unit (10) are connected in series is connected in parallel with the path in which the electrochemical cell (21, 22) is connected, and the signal evaluation unit (12) determining the internal resistance (Rᵢ) of the electrochemical cell (21, 22) on the basis of the electrical signals fed to the signal evaluation unit in this way, **characterized in that** the internal resistance (Rᵢ) of the electrochemical cell (21, 22) is determined in a first operating mode with the first switch (Scsi) closed and with the second switch (S_{CP1}) closed.

2. Method according to Claim 1, **characterized in that** the internal resistance (Rᵢ) of the electrochemical cell (21, 22) is determined in a second operating mode with the first switch (Scsi) closed and with the second switch (S_{CP1}) open.

3. Method according to Claim 2, **characterized in that** the internal resistance (Rᵢ) of the electrochemical cell (21, 22) is determined in accordance with the first operating mode if the internal resistance (Rᵢ) of the electrochemical cell (21, 22) exceeds a predefined threshold value, and the internal resistance (Rᵢ) of the electrochemical cell (21, 22) is determined in accordance with the second operating mode if the internal resistance (Rᵢ) of the electrochemical cell (21, 22) falls below a predefined threshold value.

4. Method according to Claim 3, **characterized in that** the predefined threshold value exactly or approximately corresponds to the resistance value of the first resistor (R_P) of the evaluation and control unit (10), for example is 4 kohms or for example is 1 kohm to 8 kohms.

5. Method according to any of the preceding claims, **characterized in that** the first switch (Scsi) is open when the internal resistance (Rᵢ) of the first electrochemical cell (21, 22) is not being determined.

6. Method according to any of the preceding claims, **characterized in that** the second switch (S_{CP1}) is always closed, or at least at times is closed, when the internal resistance (Rᵢ) of the first electrochemical cell (21, 22) is not being determined.

7. Method according to any of the preceding claims, **characterized in that** the signal evaluation unit (12) determines the internal resistance (Rᵢ) of the electrochemical cell (21, 22) on the basis of the electrical signals fed to the signal evaluation unit and taking account of the transient recovery processes which concern these signals and which take place after the closing of the first switch (Scsi).

8. Method according to any of the preceding claims, **characterized in that** the evaluation and control unit (10) has a third electrical terminal (APE), for connection to a first electrode of a second electrochemical cell (21, 22) of the ceramic exhaust gas sensor (20), the second electrical terminal (IPE) of the evaluation and control unit (10) being provided for connection to the second electrode of the second electrochemical cell (21, 22) of the ceramic exhaust gas sensor (20), and **in that** the internal resistance (Rᵢ₂) of the second electrochemical cell (21, 22) is determined in a manner analogous to that described for the first electrochemical cell (21, 22) in any of the preceding claims.

9. Method according to the preceding claim, **characterized in that** the determination of the internal resistance (Rᵢ) of the electrochemical cell (21, 22) and the determination of the internal resistance (Rᵢ₂) of the second electrochemical cell (21, 22) are carried out periodically alternatively.

10. Evaluation and control unit (10) for determining an internal resistance (Rᵢ) of an electrochemical cell (21, 22) of a ceramic exhaust gas sensor (20), in particular of a lambda probe, the electrochemical cell (21, 22) having a first electrode and a second electrode and a solid electrolyte arranged between the first electrode and the second electrode, the evaluation and control unit (10) having a first electrical terminal (RE) for connection to a first electrode of the electrochemical cell (21, 22) of the ceramic exhaust gas sensor (20), the evaluation and control unit (10) having a second electrical terminal (IPE) for connection to a second electrode of the electrochemical cell (21, 22) of the ceramic exhaust gas sensor (20), the evaluation and control unit (10) having a current source (SR), which is connectable to the first terminal (RE) via a first switch (Scsi) of the evaluation and control unit (10), a signal evaluation unit (12) of the evaluation and control unit (10) being connected to the second electrical terminal (IPE), such that the current source (SR) is connected to the signal evaluation unit (12) of the evaluation and control unit (10) via the electrochemical cell (21, 22), the current source (SR), if connected to the first electrical terminal (RE), also being connectable to the signal evaluation unit (12) of the evaluation and control unit (10) via a second switch (S_{CP1}) of the evaluation and control unit (10) and via a first resistor (R_P) of the evaluation and control unit (10), said first resistor being connected in series with the second switch (S_{CP1}), such that the path in which the second switch (S_{CP1}) of the evaluation and control unit (10) and the first resistor (R_P) of the evaluation and control unit (10) are connected in series is connected in parallel with the path in which the electrochemical cell (21, 22) is connected, the evaluation and control unit (10) being configured to the effect that the signal evaluation unit (10) determines the internal resistance (Rᵢ) of the electrochemical cell (21, 22) on the basis of the electrical signals fed to the signal evaluation unit in this way in a manner according to any of the preceding claims.

11. Evaluation and control unit according to the preceding claim, **characterized in that** it is integrated on an ASIC.

## Revendications

1. Procédé de détermination d'une résistance interne (Rᵢ) d'une cellule électrochimique (21, 22) d'un capteur de gaz d'échappement en céramique (20), notamment d'une sonde lambda, la cellule électrochimique (21, 22) comportant une première électrode et une deuxième électrode et un électrolyte solide placé entre la première électrode et la deuxième électrode, la détermination de la résistance interne (Rᵢ) de la cellule électrochimique (21, 22) étant effectuée au moyen d'une unité d'évaluation et de commande (10), l'unité d'évaluation et de commande (10) comportant une première borne électrique (RE) destinée à être reliée à une première électrode de la cellule électrochimique (21, 22) du capteur de gaz d'échappement en céramique (20), l'unité d'évaluation et de commande (10) comportant une deuxième borne électrique (IPE) destinée à être reliée à une deuxième électrode de la cellule électrochimique (21, 22) du capteur de gaz d'échappement en céramique, l'unité d'évaluation et de commande (10) comportant une source de courant (SR) qui peut être reliée à la première borne électrique (RE) par le biais d'un premier commutateur (Scsi) de l'unité d'évaluation et de commande (10), une unité d'évaluation de signal (12) de l'unité d'évaluation et de commande (10) étant reliée à la deuxième borne électrique (IPE) de sorte que la source de courant (SR) soit reliée, par le biais de la cellule électrochimique (21, 22), à l'unité d'évaluation de signal (12) de l'unité d'évaluation et de commande (10), la source de courant (SR), lorsqu'elle est reliée à la première borne (RE), pouvant également être reliée à l'unité d'évaluation de signal (12) de l'unité d'évaluation et de commande (10) par le biais d'un deuxième commutateur (S_{CP1}) de l'unité d'évaluation et de commande (10) et par le biais d'une première résistance (R_P), montée en série avec le deuxième commutateur (S_{CP1}), de l'unité d'évaluation et de commande (10) de sorte que le chemin, dans lequel le deuxième commutateur (S_{CP1}) de l'unité d'évaluation et de commande (10) et la première résistance (R_P) de l'unité d'évaluation et de commande (10) sont montées en série, soit monté en parallèle avec le chemin dans lequel la cellule électrochimique (21, 22) est montée, et l'unité d'évaluation de signal (12) déterminant la résistance interne (Rᵢ) de la cellule électrochimique (21, 22) sur la base des signaux électriques qui sont fournis à ladite unité d'évaluation de signal, **caractérisé en ce que** la détermination de la résistance interne (Rᵢ) de la cellule électrochimique (21, 22) est effectuée dans un premier mode de fonctionnement lorsque le premier commutateur (Scsi) est fermé et que le deuxième commutateur (S_{CP1}) est fermé.

2. Procédé selon la revendication 1, **caractérisé en ce que** la résistance interne (Rᵢ) de la cellule électrochimique (21, 22) est déterminée dans un deuxième mode de fonctionnement lorsque le premier commutateur (Scsi) est fermé et que le deuxième commutateur (S_{CP1}) est ouvert.

3. Procédé selon la revendication 2, **caractérisé en ce que** la détermination de la résistance interne (Rᵢ) de la cellule électrochimique (21, 22) est effectuée selon le premier mode de fonctionnement lorsque la résistance interne (Rᵢ) de la cellule électrochimique (21, 22) devient supérieure à une valeur de seuil spécifiée et la détermination de la résistance interne (Rᵢ) de la cellule électrochimique (21, 22) est effectuée selon le deuxième mode de fonctionnement lorsque la résistance interne (Rᵢ) de la cellule électrochimique (21, 22) devient inférieure à une valeur de seuil spécifiée.

4. Procédé selon la revendication 3, **caractérisé en ce que** la valeur de seuil spécifiée correspond exactement ou approximativement à la valeur de résistance de la première résistance (R_P) de l'unité d'évaluation et de commande (10), par exemple 4 kOhm ou par exemple 1 kOhm à 8 kOhm.

5. Procédé selon l'une des revendications précédentes, **caractérisé en ce que** le premier commutateur (Scsi) est ouvert lorsque la résistance interne (Rᵢ) de la première cellule électrochimique (21, 22) n'est pas déterminée.

6. Procédé selon l'une des revendications précédentes, **caractérisé en ce que** le deuxième commutateur (S_{CP1}) est toujours ou au moins temporairement fermé lorsque la résistance interne (Rᵢ) de la première cellule électrochimique (21, 22) n'est pas déterminée.

7. Procédé selon l'une des revendications précédentes, **caractérisé en ce que** l'unité d'évaluation de signal (12) détermine la résistance interne (Rᵢ) de la cellule électrochimique (21, 22) sur la base des signaux électriques qui lui sont fournis et en tenant compte des processus transitoires affectant ces signaux qui se produisent après la fermeture du premier commutateur (Scsi) .

8. Procédé selon l'une des revendications précédentes, **caractérisé en ce que** l'unité d'évaluation et de commande (10) comporte une troisième borne électrique (APE) destinée à être reliée à une première électrode d'une deuxième cellule électrochimique (21, 22) du capteur de gaz d'échappement en céramique (20), la deuxième borne électrique (IPE) de l'unité d'évaluation et de commande (10) étant prévue pour être reliée à la deuxième électrode de la deuxième cellule électrochimique (21, 22) du capteur de gaz d'échappement en céramique (20), et **en ce que** la détermination de la résistance interne (Rᵢ₂) de la deuxième cellule électrochimique (21, 22) est effectuée de manière analogue à celle décrite dans l'une des revendications précédentes pour la première cellule électrochimique (21, 22).

9. Procédé selon la revendication précédente, **caractérisé en ce que** la détermination de la résistance interne (Rᵢ) de la cellule électrochimique (21, 22) et la détermination de la résistance interne (Rᵢ₂) de la deuxième cellule électrochimique (21, 22) sont effectuées périodiquement de manière alternée.

10. Unité d'évaluation et de commande (10) destinée à déterminer une résistance interne (Rᵢ) d'une cellule électrochimique (21, 22) d'un capteur de gaz d'échappement en céramique (20), notamment d'une sonde lambda, la cellule électrochimique (21, 22) comportant une première électrode et une deuxième électrode et un électrolyte solide placé entre la première électrode et la deuxième électrode, l'unité d'évaluation et de commande (10) comportant une première borne électrique (RE) destinée à être reliée à une première électrode de la cellule électrochimique (21, 22) du capteur de gaz d'échappement en céramique (20), l'unité d'évaluation et de commande (10) comportant une deuxième borne électrique (IPE) destinée à être reliée à une deuxième électrode de la cellule électrochimique (21, 22) du capteur de gaz d'échappement en céramique (20), l'unité d'évaluation et de commande (10) comportant une source de courant (SR) qui peut être reliée à la première borne (RE) par le biais d'un premier commutateur (Scsi) de l'unité d'évaluation et de commande (10), une unité d'évaluation de signal (12) de l'unité d'évaluation et de commande (10) étant reliée à la deuxième borne électrique (IPE) de sorte que la source de courant (SR) soit reliée, par le biais de la cellule électrochimique (21, 22), à l'unité d'évaluation de signal (12) de l'unité d'évaluation et de commande (10), la source de courant (SR), lorsqu'elle est reliée à la première borne (RE), pouvant également être reliée à l'unité d'évaluation de signal (12) de l'unité d'évaluation et de commande (10) par le biais d'un deuxième commutateur (S_{CP1}) de l'unité d'évaluation et de commande (10) et par le biais d'une première résistance (R_P), montée en série avec le deuxième commutateur (S_{CP1}), de l'unité d'évaluation et de commande (10) de sorte que le chemin, dans lequel le deuxième commutateur (S_{CP1}) de l'unité d'évaluation et de commande (10) et la première résistance (R_P) de l'unité d'évaluation et de commande (10) sont montés en série, soit monté en parallèle avec le chemin dans lequel la cellule électrochimique (21, 22) est montée, l'unité d'évaluation et de commande (10) étant conçue pour que l'unité d'évaluation de signal (10) détermine la résistance interne (Rᵢ) de la cellule électrochimique (21, 22) sur la base des signaux électriques qui sont fournis à ladite unité d'évaluation de signal (10) selon l'une des revendications précédentes.

11. Unité d'évaluation et de commande selon la revendication précédente, **caractérisée en ce qu'**elle est intégrée sur un ASIC.
